# EUROPEAN PATENT APPLICATION

(11) **EP 1 431 248 A2**
(43) Date of publication of application: **23.06.2004**
(21) Application number: 03257684.5
(22) Date of filing: 06.12.2003
(51) Int. Cl.: C02F 1/42

(54) **Water treatment system with low waste volume**

(30) Priority: 18.12.2002 US 434716
(71) Applicant: ROHM AND HAAS COMPANY, Philadelphia, Pennsylvania 19106-2399 (US)
(72) Inventor: Miers, Jr., Jay Alfred, Langhorne, Pennsylvania 19047 (US); McNulty, James Thomas, Perkasie, Pennsylvania 18944 (US)
(74) Representative: Kent, Venetia Katherine

(57) **Abstract**

A continuous water treatment system comprising at least two stationary cylindrical vessels, wherein each vessel contains an ion exchange resin, and each vessel has at each end a flat head and a fractal liquid distributor.

## Description

This invention relates to a high-efficiency water treatment system useful for removing contaminants from water with minimal generation of liquid waste. In the standard ion exchange process for removal of anionic contaminants, the contaminated drinking water is contacted with strongly basic anion exchange resin in a pressure vessel. A brine solution is used to remove nitrate from the resin during a "regeneration" process. The current method for disposal of the nitrate-laden brine is to discharge it to municipal water effluent treatment plants or directly to the ocean. Minimizing brine waste would reduce chloride discharges to the environment and also would reduce waste treatment costs.

Areas in which there is substantial agricultural activity often suffer from contamination of ground water by nitrate derived from fertilizers and livestock. A previous approach to a high-efficiency water treatment system useful for removing nitrates is disclosed in PCT patent application WO 02/48047. The system disclosed in this reference uses multiple vessels controlled by a computer algorithm and multiple valves on each vessel to approximate pseudo-moving bed performance. However, this process is susceptible to mechanical failures due to the large number of valves. The process is unstable because small fluctuations in the process streams will change the loading rates or regeneration timing and thus disrupt the steady-state operation of the system. Moreover, this reference discloses only the conventional domed vessels.

The problem addressed by this invention is the need for a reliable low-waste water treatment system useful for removing contaminants from water at a high flow rate.

### STATEMENT OF INVENTION

The present invention provides a continuous water treatment system comprising at least two stationary cylindrical vessels, wherein each vessel contains an ion exchange resin, and each vessel has at each end a flat head and a fractal liquid distributor.

### DETAILED DESCRIPTION

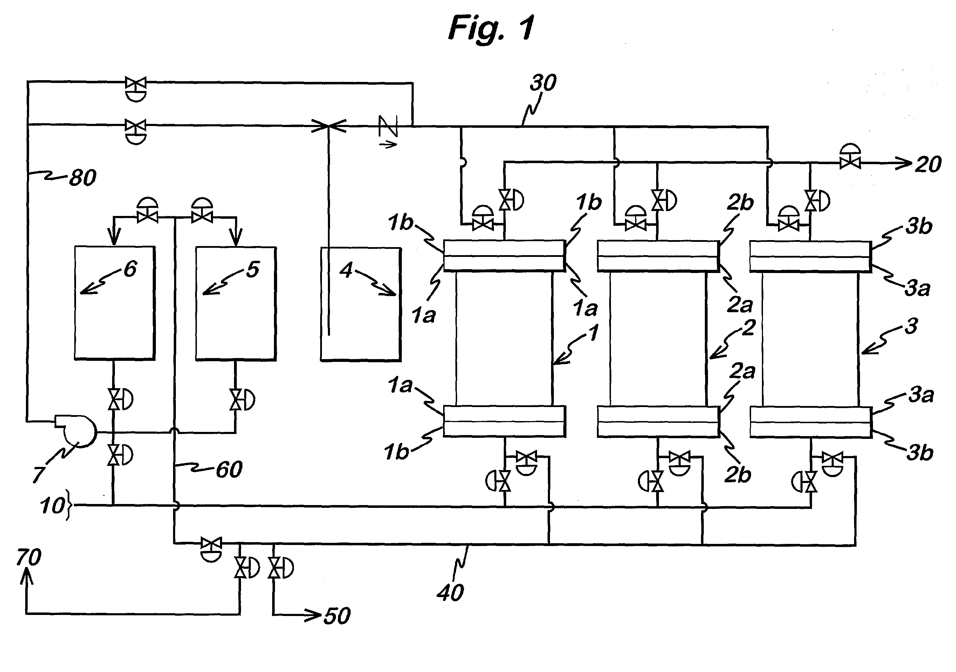

Figure 1 is a schematic flow diagram illustrating a preferred embodiment of the invention having three vessels.

A "fractal liquid distributor" is a device for substantially evenly distributing a liquid by means of flow paths which are approximately hydraulically identical. Systems of this type are disclosed, for example, in U.S. Pat. Nos. 4,999,102 and 5,354,460; and in M. Kearney; "Control of Fluid Dynamics with Engineered Fractals"; *Chem. Eng. Commun*.;vol. 173, 43-52 (1999). The distributor may be constructed of any material compatible with the liquid being treated and the regenerant solution(s). Preferred materials include, for example, PVC, cPVC and polypropylene. Preferably, the fractal liquid distributor is cylindrical and can be mounted on each end of a cylindrical vessel to allow liquid to enter or leave the vessel with a substantially uniform distribution across the cross-section of the vessel. Preferably, the fractal liquid distributor has a single flow channel directed away from the vessel and multiple flow channels directed into the vessel. Preferably, the liquid distributor has a diameter substantially equal to the outside diameter of the vessel, and is attached by clamping it to the vessel. In another embodiment of the invention, the manifold has a diameter substantially equal to the inside diameter of the vessel and sits within the vessel. The substantially even flow distribution provided by the manifold allows the treatment media in the vessels to attain maximum efficiency by maintaining a sharp separation between liquid phases of different compositions, in turn allowing use of higher flow rates or smaller vessels. Regeneration efficiency also is maximized by this arrangement, which ensures that regenerant solution will be distributed efficiently by the manifold through which it enters the vessel. Moreover, when regenerant is directed through a vessel in a direction opposite to the service flow, and the vessel has a fractal liquid distributor at each end, both the service and regenerant flows are distributed and collected efficiently.

Preferably, the cylindrical vessels used in the system of this invention are pressure vessels, and are set up in a vertical configuration. The vessels are stationary, i.e., when the system is operated, the vessels are fixed in position, but the vessels can be removed when taken offline. The vessels and associated piping and valves are constructed of any material compatible with the water being treated and the regenerant solution(s). Preferred materials include, for example, butyl-rubber lined steel and stainless steel. Preferably, the treatment medium substantially fills the interior of the vessel when the medium is swelled by the water. The vessels have flat heads and flat bottoms, reducing the height of the vessels relative to vessels having curved heads and bottoms. Preferably, the inside diameter of the vessels is from 0.6 m to 1.5 m. Preferably, the inside diameter of the vessels is at least 0.75 m, more preferably at least 0.9 m. Preferably, the inside diameter is no more than 1.25 m. In one preferred embodiment of the invention, the inside diameter of the vessels is from 1.1 m to 1.25 m. The height of the vessels preferably is at least 0.6 m, more preferably at least 0.9 m, and most preferably at least 1.1 m. Preferably, the height of the vessels is no more than 1.3 m. In a preferred embodiment of the invention, the height of the vessels is from 1.2 m to 1.3 m.

Preferably, the vessels contain anion exchange resin. In a preferred embodiment of the invention, a strong base ion exchange resin is used to remove complex anionic contaminants from water. Examples of such contaminants include nitrate, perchlorate and arsenate. In another preferred embodiment, a weak base ion exchange resin is used to remove chromate and dichromate. A strongly basic anion exchange resin contains fixed quaternary ammonium functional sites bonded to an insoluble polymer such as styrene-divinyl benzene, or polyacrylic copolymers. Examples of this type of material include Amberlite™ IRA400, Amberlite™ IIZA410, Amberlite™ IRA458, or Imac™ HP555. A weakly basic anion exchange resin contains secondary or ternary amines bonded to an insoluble polymer matrix such as styrene-divinyl benzene, polyacrylic, and phenol-formaldehyde copolymers. Examples of weakly basic anion exchange resins include Amberlite™ IRA96, Amberlite™ IRA67 and Duolite™ A7.

The use of vessels having flat heads and fractal liquid distributors in the present invention minimizes waste volumes by producing a sharp "wave front" between process and regenerant streams, regenerant and rinse streams, and rinse and process streams. In traditional vessels, there is considerable mixing between the streams, with the result that some of the process stream or a rinse stream becomes mixed with regenerant and must be disposed of as waste, thereby increasing the total waste volume. The use of flat heads on the vessels in this invention eliminates mixing of the streams in the head space, as typically occurs in traditional vessels having domed heads. Fractal liquid distributors evenly distribute and collect both the process and regenerant streams, thereby approximating plug flow in the vessels, and allowing a sharp separation between the streams.

In a preferred embodiment of the invention, the water treatment system comprises from two to five vessels containing an anion exchange resin. Typically, a pair of vessels is used in parallel to treat water, with simultaneous regeneration of one or more vessels. Preferably, the water treatment system comprises three or four vessels. In one preferred embodiment, the ion exchange system contains three vessels; in this embodiment, two vessels are used in parallel to treat water while the third vessel is regenerating. In a preferred embodiment of the invention, the ion exchange system, including three vessels and associated piping, is constructed on a support frame ("skid"), and measures no more than 2.30 m wide by 2.37 m high by 6.08 m long. These dimensions allow each part to fit within a standard sea transport container. Preferably, each vessel has two manifolds ("headers") constructed from piping to distribute or collect flow to or from the vessels, and attached to each end, with two valves to control flow in and out of the vessel.

In a preferred embodiment in which the system is used to remove nitrate contamination from water, the ion exchange system contains commercially available macroreticular ion exchange resins having at least 98%, preferably at least 99%, of their particles in a size range from 400 microns to 1000 microns. In another preferred embodiment in which the system is used to remove perchlorate or arsenate ions from water, the beads are commercially available uniform particle size resins having a harmonic mean size from 400 microns to 700 microns, more preferably from 500 microns to 650 microns, and most preferably from 600 microns to 650 microns. Preferably, at least 95% of the beads are within 50 microns of the mean. Most preferably, at least 95% of the beads are in a size range from 580 microns to 680 microns. Uniform particle size resins are known and are manufactured by various methods, including screening, expanding and jetting. For example, U.S. Pat. No. 3,922,255 discloses a method for producing beads of a controllable uniform size.

Even distribution of flow and use of resin beads in the preferred particle size range allow use of higher flow rates. Preferably, water is treated at a flow rate from 10 m³/hour to 60 m³/hour per vessel, more preferably at a flow rate of at least 20 m³/hour per vessel, more preferably at least 30 m³/hour per vessel and most preferably at least 40 m³/hour per vessel. In one preferred embodiment of the invention, water is treated at a flow rate from 40 m³/hour to 60 m³/hour per vessel. In another preferred embodiment of the invention, water is treated at a flow rate from 30 m³/hour to 40 m³/hour per vessel. In another preferred embodiment of the invention, water is treated at a flow rate from 20 m³/hour to 30 m³/hour per vessel. Preferably, the smaller flow ranges correspond to the smaller vessel sizes mentioned herein.

The system of this invention is designed to operate continuously, with regeneration of any vessel, or vessels, not in service. In a preferred embodiment in which there are three vessels, two are in service while the third is being regenerated. Regeneration of the ion exchange resins may be performed at a variety of flow rates, depending on regenerant concentration, volume and contact time with the resin, as is understood by those skilled in the art. Preferably, regeneration of the ion exchange resins is performed at a flow rate of 2 to 8 bed volumes per hour (BV/h). Regeneration of anion exchange resin with 10% to 20% aqueous sodium chloride preferably is performed at 2 to 8 BV/h, most preferably at about 4 BV/h. Preferably, the service flow enters the vessel at the bottom, while the regenerant and displacement rinse flow enters from the top, and the vessels have a fractal liquid distributor at the bottom and another at the top to evenly distribute and collect both the service and regenerant flows. Preferably, the regeneration time is less than the service time to allow the vessels to be regenerated and placed back into service quickly.

Preferably, one bed volume of regenerant solution is used to introduce the desired mass of regenerant to the resin. Preferably, the regenerant solution is 10% to 20% aqueous sodium chloride solution (brine). The brine solution is produced by pumping saturated aqueous sodium chloride solution from a brine maker tank and diluting it, either with water or dilute sodium chloride from a dilute brine tank containing recycled brine. After regeneration, the brine solution is displaced from the vessel to waste with one bed volume of displacement rinse water. The first displacement volume of rinse water is subsequently displaced to waste with a second bed volume of displacement rinse water. This second bed volume of displacement rinse water is displaced to the dilute brine tank with a third bed volume of rinse water such that this volume is recovered. The subsequent volumes of rinse water are displaced to the rinse recycle tank to be used in subsequent regenerations of any of the given vessels. In this manner, only two bed volumes of waste are created. Most preferably, the first volume of displacement rinse water is displaced to the dilute brine tank by the second volume of displacement rinse water and this second and subsequent rinse volumes are displaced to the rinse recycle tank to be used for subsequent regenerations. In this manner, only one bed volume of waste is produced. This would not be possible without the sharp separation between regenerant and rinse that is achieved by using the fractal liquid distributors and flat heads on the vessels.

Referring to Figure 1, which illustrates a preferred embodiment in which the treatment system has three vessels, the feed water enters through line **10** and is directed by the appropriate valve positions to the bottom inlet of the two vessels in service, i.e., two of **1, 2** and **3,** where in each case it flows through a flat vessel end, **1b**, **2b** or **3b,** a fractal liquid distributor, **1a, 2a** or **3a,** and then the resin bed in the vessel, exiting the top of the vessel through another fractal liquid distributor, and then is routed through line **20** as treated water.

Simultaneous regeneration of the vessel not in service is accomplished with brine produced by combining saturated aqueous sodium chloride from brine maker tank **4** with water from line **10**, via pump **7** and lines **80** and **30**, or with dilute brine from the dilute brine tank **5.** The brine is routed through line **30** and to the top of the vessel being regenerated, where it flows through a fractal liquid distributor and then the resin bed in the vessel, exiting the bottom of the vessel through another fractal liquid distributor, then passing through line **40** from which it is directed to waste through line **50** or to the dilute brine tank **5** through line **60**. After regeneration, the vessel is rinsed with water, either raw water from line **10**, via pump **7** and lines **80** and **30**, or water from the rinse recycle tank **6**, via pump **7** and lines **80** and **30**.

## Claims

1. A continuous water treatment system comprising at least two stationary cylindrical vessels, wherein each vessel contains an ion exchange resin, and each vessel has at each end a flat head and a fractal liquid distributor.

2. The water treatment system of claim 1 in which the ion exchange resin consists of beads having a harmonic mean size from 400 microns to 700 microns, and having at least 95% of beads no more than 50 microns from the harmonic mean size.

3. The water treatment system of claim 2 in which water is treated at a flow rate per vessel of from 10 m³/hour to 60 m³/hour.

4. The water treatment system of claim 3 having three or four vessels, each of which contains anion exchange resin.

5. The water treatment system of claim 4 in water is treated at a flow rate per vessel of from 40 m³/hour to 60 m³/hour.

6. The water treatment system of claim 5 constructed on a support frame, and measuring no more than 2.30 m wide by 2.37 m high by 6.08 m long.

7. The water treatment system of claim 6 in which an inside diameter of each vessel is from 1.1 m to 1.25 m.

8. The water treatment system of claim 7 in which a height of each vessel is from 1.2 m to 1.3 m.

9. The water treatment system of claim 8 in which the anion exchange resin is a strong base anion exchange resin.

10. The water treatment system of claim 9 in which the strong base ion exchange resin is a macroreticular ion exchange resin capable of removing nitrate, and having at least 98%, preferably at least 99%, of its particles in a size range from 400 microns to 1000 microns.
